# EUROPEAN PATENT APPLICATION

(11) **EP 2 088 732 A1**
(43) Date of publication of application: **12.08.2009**
(21) Application number: 08002217.1
(22) Date of filing: 06.02.2008
(51) Int. Cl.: H04L 29/06, H04N 7/167, G06F 21/00

(54) **Apparatus and method for secure data processing**

(71) Applicant: Micronas GmbH, 79108 Freiburg i. Br. (DE)
(72) Inventor: Hils, Andreas, 82008 Unterhaching (DE)
(74) Representative: Patentanwälte Westphal, Mussgnug & Partner

(57) **Abstract**

Disclosed is a method for secure processing of a data stream using a secret key stored in a key storage (2), with the data stream (DS) including content data (D) and context information (C), with the key storage (2) holding several secret keys (SK) and with the method comprising: extracting the context information (C) from the content data stream (DS); generating address information (KA) based on the context information (C) for accessing one of the several secret keys (SK) stored in the key storage (2); retrieving from the key storage (2) the one of the several secret keys using the address information (KA); processing the content data using the retrieved secret key.

Further disclosed is an apparatus for secure data processing.

## Description

The present invention relates to a method and an apparatus for secure processing of data.

Cryptographic applications are employed to insure the secure transmission of data. These data may be audio or video data that are provided by a content provider and that are transmitted to authorized users. These data will be referred to as "content data" in the following. To prevent unauthorized users from accessing the content the content data are encrypted using an encryption key, where authorized users may decrypt the content data using a matching decryption key. The decryption key is stored in a user's signal processing device, like a set-top-box. The signal processing device decrypts the content data in order to allow the authorized user to access the data, i.e. to play back decrypted video or audio data on a play back device.

The secret decryption key that the signal processing device uses is stored by any secure means in a key storage in the device. The key, for example, may already be implemented when the user purchases the processing device; may be transmitted to the signal processing device by secure means; or may be generated in the signal processing depending on key information received from the content provider and using a secure algorithm implemented in the device. Usually, decryption is performed using a cipher processing unit that receives the encrypted content data and decryption key.

In known methods and apparatuses a central processing unit (CPU) controls the overall functionality of the signal processing device. The central processing unit to a given stream of encrypted content data retrieves the matching decryption key from the key storage and forwards the data stream and the decryption key to the cipher unit for decryption purposes. The content data stream includes information on the origin of the data stream and/or on the method of encryption that allows the CPU to retrieve the correct secret key from the key storage. However, software-controlled CPUs are insecure in that different applications (processes) may run on the same CPU. Besides the process that retrieves the secret decryption key from the key storage and forwards the key together with the data stream to the cipher unit further processes may run on the same CPU, where one of these further processes may eavesdrop the secret decryption key retrieved from the key storage. This is particular relevant in signal processing devices that are capable of handling data provided by different content providers thereby requiring different decryption keys.

It is an object of the present invention to provide a method and an apparatus for secure processing of content data using secret keys, that reduces the risk of eavesdropping the secret keys. The object is solved by the method according to claim 1 and the apparatus according to claim 7 Specific embodiments are subject to the subclaims.

A method according to an example of the invention for secure processing of a content data stream using a secret key stored in a key storage, with the content data stream including content data and encryption data and with the key storage holding several secret stores, comprises: extracting the encryption information from the content data stream; generating address information based on the encryption information for accessing one of the several secret keys stored in the key storage; retrieving the one of the several secret keys using the address information from the key storage; feeding the secret key and the content data to a cipher processing unit for processing the content data using the retrieved secret key.

In this method the secret key used for processing the content data is directly fed from the key storage to the cipher processing unit. A processing unit that extracts the encryption information from the data stream does not directly access the secret key but only provides address information based on the encryption information to the key storage, where the address information is used for accessing the stored secret key. In this method the processing unit, which may be central processing unit (CPU) and which may be connected to a data bus shared by several users, does not retrieve the secret key, thereby preventing the problem of eavesdropping the secret key by other users/processes sharing the same CPU.

The cipher processing unit that receives the secret key and the content data to be processed may be a dedicated (embedded) hardware unit.
Embedded hardware units are tamper-evident and therefore are tamper-proof in difference to software solutions. They also provide a significant improvement in terms of eavesdropping the secret keys.

An apparatus according to an example of the invention for secure processing of a content data stream including content data and encryption data, comprises: a processing unit for extracting the encryption data from the data stream; an address generation circuit for generating address data based on the encryption data; a key storage for storing several secret keys; a read out device receiving the address data and retrieving a secret from the key storage based on the address data; a cipher processing unit for receiving the content data and the secret key retrieved from the key storage and for processing the content data using the secret key.

The invention can be better understood with reference to the enclosed figures. In the figures emphasis is placed upon illustrating the principles of the invention. Therefore, only components necessary for illustrating the principle are depicted.
- Figure 1: shows a block a diagram of an illustrative example of an apparatus for secure processing of a data stream.
- Figure 2: shows a block a diagram of a further illustrative example of an apparatus for secure processing of a data stream.
- Figure 3: illustrates a method for secure processing of a data stream using a flow-diagram.

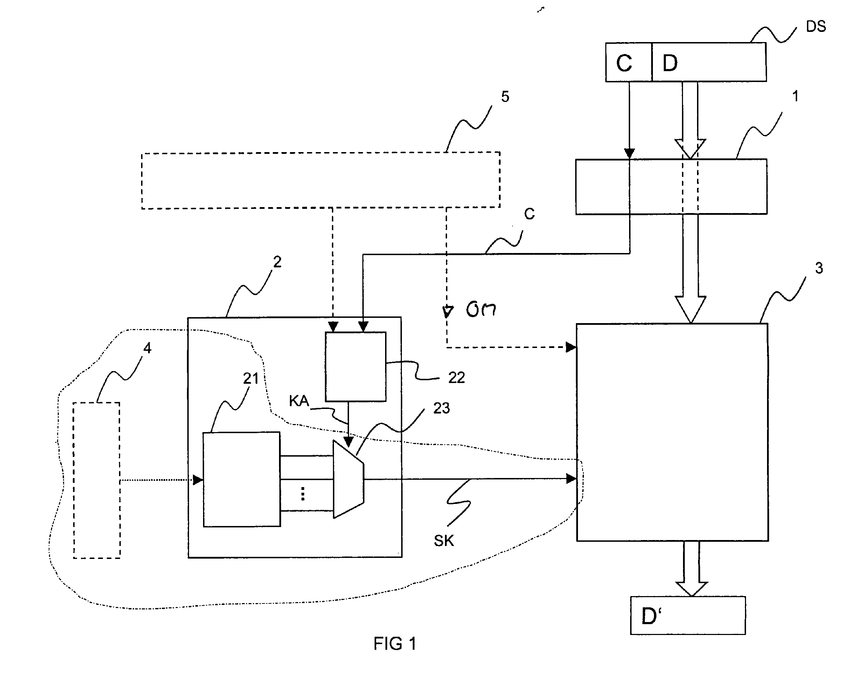

Fig. 1 illustrates an example of an apparatus for secure processing of a content data stream DS. The apparatus comprises a first processing unit 1 that receives the data stream DS. The data stream DS contains content data D, e.g. video data or audio data, and context information C. The context information may include information on how the content data D have been encrypted and/or may include information on the content provider who provides the content data D. The context information C is required for selecting a matching secret key to be used for decrypting the encrypted content data D. The data stream DS may be a stream of data packages, where each of the data packages includes a content data package and context information.

The apparatus further comprises a key storage 2 for storing secret keys required for decrypting the content data D. The key storage 2 comprises a memory 21 for storing several secret keys. The different secret keys stored in the memory 21 may be dedicated to different content providers, with each of the content providers using different encryption methods for encrypting their content data, and with different secret keys being required for decrypting these content data provided by different providers.

Different methods may be applied for storing the secret keys in the key storage, whereas these methods dependent on the type of memory that is used for key memory 21. According to one example memory 21 is a non-volatile memory, like a ROM or PROM, in which the secret keys are stored during a manufacturing process, or later. According to another example key memory 21 is an SRAM into which the secret keys can be programmed at run-time. For programming the secret keys into an SRAM key memory a secure processor may be used. In this case memory 21 comprises a secure interface circuit 4 (shown in dashed lines in figure 4) that - by any secure means - provides the secret keys to the memory 21 in the key storage 2.

Memory 21 comprises several memory locations having different memory addresses, whereas each of the several secret keys is stored in one of these memory locations.

First processing unit 1 is adapted to extract the context information from the data stream DS and to provide the context information C to an address generation circuit 22 in the key storage 2. The address generation circuit 22 is adapted to generate key addresses based on the encryption information C. In other words: each one of several different context information C that may be included in the data stream DS is assigned to one of the several secret keys stored in the key memory 21. The address generation circuit 22 holds information on the addresses where the different secret keys are stored in the memory 21, and holds information on which context information is assigned to which of the secret keys. Based on the context information C the address generation circuit 22 generates a key address that includes information on the address where the secret key belonging to the encryption information C is stored.

Address generation circuit 22 may comprise a so-called context addressable memory (CAM) which has a number of storage locations for storing the key addresses, and from which the key addresses are read out using the context information during the context look-up. In this CAM the context information provided by the first processing unit is used to identify the memory location from which the key address is returned. According to one example context information is a so-called context identifier (ID), which is a number that may directly be used to perform the look-up in the context memory, and thereby to read out a key address from the addressed memory location of the context memory.

A multiplexer 23 in the key storage 2 receives the key address KA from the address generation circuit and retrieves the secret key from that memory location that has the key address KA.

The data processing apparatus further comprises a cipher unit 3 receiving the content data D from the first processing unit 1 and the secret key SK received from the key storage 2, and being adapted to process the content data D using the secret key SK in order to provide decrypted content data D'.

The dash-dotted line illustrates a "security boundary". The secret keys are exclusively handled within this secret boundary. The keys SK are only provided to the cipher unit 3 but are not provided to any insecure data processing units outside the security boundary. The security boundary includes the secure interface unit 4, the key memory 21 and the key multiplexer 23.

The data processing , optionally, comprises a configuration interface 5 that is connected to the cipher unit 3 and/or the address generation circuit 22 for configuring the cipher unit 3 and/or the address generation circuit 22. In this connection address generation circuit 22 may be configurable in terms of an assignment of context information that is retrieved from the first processing unit 1 to the different memory locations in the address generation circuit 22. It is therefore programmable which context information retrieves a key from which key address in the address generation circuit 22.

Cipher unit 3 may be adapted to assume one of several operation modes dependent on an operation mode signal OM provided by the interface circuit 5. According to a first example different operation modes may be an encryption mode in which cipher unit 3 encrypts data received from the first processing unit using a given secret key received from the key storage, and a decryption mode in which cipher unit 3 decrypts data received from the first processing unit using a given secret key received from the key storage.

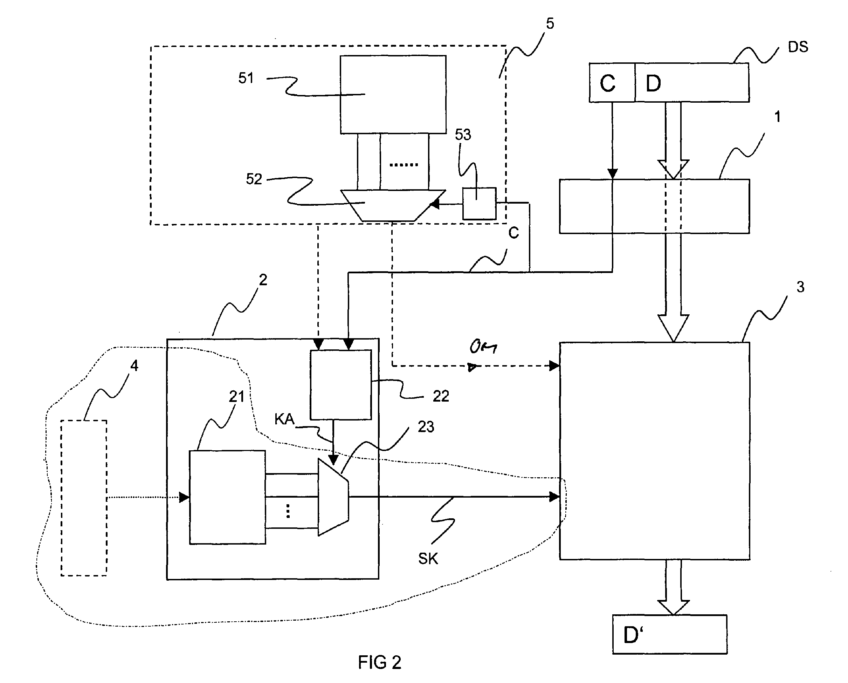

According to another example the operation mode of cipher unit 3 is dependent on the context information. Fig. 2 shows an example of a data processing unit having such functionality. In this data processing unit 3 interface circuit 5 receives the context information C as provided by the first processing unit 1 and provides the operation mode signal OM that adjusts the operation mode of cipher unit 3 dependent on such context information C. For providing the operation mode signal OM the interface circuit in Fig. 2 comprises an operation mode signal generation circuit 51 that provides a number of different operation mode signals, and a selection circuit 52 for selecting one of the different operation mode signals and providing the selected operation mode signal to the cipher unit 3. Referring to the example in Fig. 2 operation mode signal generation circuit 51 may be a storage holding the number of different operation mode signals. The selection circuit 51 may be a multiplexer receiving the number of different operation mode signals on signal inputs, and the context information on a control input, and providing one of the operation mode signals OM on a signal output dependent on the context information C.

In this example a different operation mode may be assigned to each different context information. Thus, cipher unit may have a different operation mode for each secret key SK it receives dependent on the context information C from the key storage 2. The cipher processing unit 3 may be a usual cipher processing unit, and the different operation modes may be so-called data processing modes that usual cipher processing units 3 are able to handle. These processing modes may be known processing modes and, additionally, may differ in terms of whether encryption or decryption is to be performed. Of course one and the same operation mode may be performed for a number of secret keys. In this case interface circuit 5 provides the same operation mode signal for those different context information that select said number of different keys from the key storage.

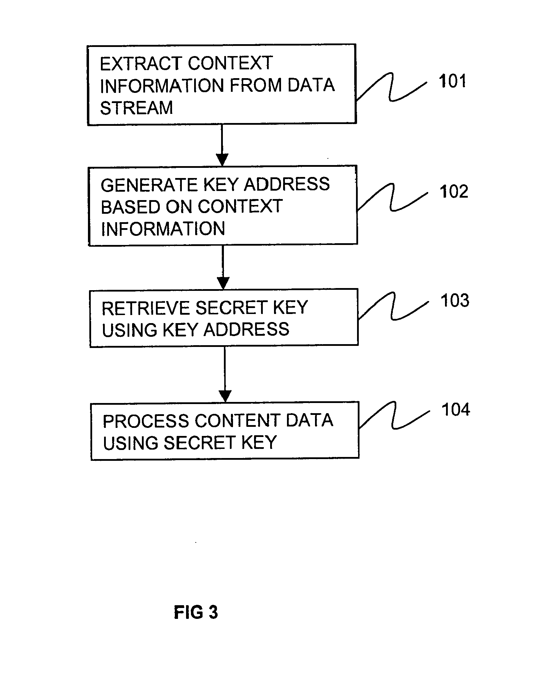

Fig. 3 by way of a flow-chart illustrates an example of a method for secure data processing. Referring to Fig. 2 in a first step 101 context data are extracted from a data stream that includes context and content data. In next steps 102, 103 address information are generated based on the context information and a secret key is retrieved from a key storage using the address information. Finally, content data included in the data stream are processed using the secret key retrieved from the key storage.

## Claims

1. A method for secure processing of a data stream using a secret key stored in a key storage (2), with the data stream (DS) including content data (D) and context information (C), with the key storage (2) holding several secret keys (SK) and with the method comprising:
extracting the context information (C) from the content data stream (DS),
generating address information (KA) based on the context information (C) for accessing one of the several secret keys (SK) stored in the key storage (2),
retrieving from the key storage (2) the one of the several secret keys using the address information (KA),
processing the content data using the retrieved secret key.

2. The method of claim 1, in which the content data are processed using a cipher processing unit

3. The method of one of claims 1 and 2, in which the content data stream comprises a sequence of data packages, with each of the packages comprising an encryption information (C) and a content data package (D).

4. The method of one of the preceding claims, in which the content data stream contains audio or video data.

5. The method of one of the preceding claims, in which the processing unit is a software-controlled processing unit.

6. The method of one of the preceding claims, in which the cipher unit (3) is a dedicated hardware unit.

7. The method of one of the preceding claims, in which the key storage comprises a context addressable memory in which the address information is stored.

8. The method of one of the preceding claims, in which the cipher unit is adapted to assume one of a number of different operation modes, and in which the operation mode is selected dependent on the context information.

9. An apparatus for secure processing of a content data stream including content data and encryption data, comprising:
a first processing unit for extracting the encryption data from the data stream and generating address data based on the encryption data,
a key storage for storing several secret keys,
a read out device receiving the address data and retrieving a secret from the key storage based on the address data,
a second processing unit for receiving the content data and the secret key retrieved from the key storage and for processing the content data using the secret key.

10. The apparatus of claim 9, in which the second processing unit is a cipher processing unit.

11. The apparatus of one of claims 9 and 10, in which the processing unit (1) is a software-controlled processing unit.

12. The apparatus of one of claims 9 to 11, in which the cipher unit (3) is a dedicated hardware unit.

13. The apparatus of one of claims 9 to 12, in which the key storage is a context addressable memory.

14. The apparatus of one of claims 9 to 13, in which the key storage (2) is connected to a secure interface (4) for feeding secret keys to the key storage.

15. The apparatus of one of the preceding claims, further comprising an interface circuit (5) that is adapted to provide an operation mode signal (OM) dependent on the context information, and in which the cipher unit (3) is adapted to assume on of a number of different operation states dependent on the operation mode signal (OM).
